# EUROPEAN PATENT SPECIFICATION

(11) **EP 2 719 576 B1**
(45) Date of publication and mention of the grant of the patent: **10.05.2017**
(21) Application number: 13188505.5
(22) Date of filing: 14.10.2013
(51) Int. Cl.: B60N 2/26, B60R 22/02

(54) **Vehicle with an adjustable seat belt system and a seat belt system**
Fahrzeug mit einem einstellbaren Sicherheitsgurtsystem und ein Sicherheitsgurtsystem
Véhicule avec un système de ceinture de sécurité réglable et un système de ceinture de sécurité

(30) Priority: 12.10.2012 NL 2009626
(43) Date of publication of application: 16.04.2014
(73) Proprietor: Tribus B.V., 3543 AC Utrecht (NL); Key Safety Systems UK Ltd, Carlisle, Cumbria CA2 6AQ (GB)
(72) Inventor:
(74) Representative: Klavers, Cornelis

(56) References cited:
- EP-A1- 1 731 385
- EP-A1- 1 918 164
- EP-A1- 1 927 520
- DE-C1- 4 343 867
- GB-A- 2 208 468
- US-A- 4 243 266
- US-A- 5 609 367
- US-B2- 8 132 863

## Description

The present invention relates to an adjustable seat belt system according to the preamble of claim 1.

EP 1918164 A1 discloses an adjustable seat belt system having a seat belt webbing guide adapter which is removably connectable to a plurality of holes in the seat backrest and in a load plate present therein.

An adjustable seat belt system is disclosed in EP 1927520 A1 wherefrom claim 1 is delimited. This seat belt system has a vertically extending strap in one embodiment having holes for holding the webbing guide. The webbing guide can be positively locked to the strap by being connected to the strap at any one of a plurality of locations.

Although the known systems of the type described above are suited for passengers of various sizes with an increased safety compared to previously known three-point seat belts, their operation is still inconvenient.

The invention has as a goal to provide a system according to the preamble that offers a more convenient operation.

This goal is realized by a system of the type described above, with the characterizing features of claim 1.

It appears that the self-adjusting property that allows for a system with a high safety in the state of the art, which is desirable, also leads to the falling down of the seat belt guide to a lower position when it is not in use, which is not desirable.

At the lower position near or on the seat back, the seat belt guide hinders a person entering the seat in at least two ways. First, it sits between the person's back and the seat back as a nuisance. Second, when the person wants to fasten the seat belt, she will have to reach her hand behind her back in order to grab the belt near or at the seat belt guide before she fastens the belt in one of the lower anchor points.

Because in the system according to the invention the vehicle, e.g. the seat back thereof or the B-pillar, is provided with retaining means also engaging the seat belt guide, for preventing the latter from sliding down below a predefined height, which height is higher than the first anchor point, the seat belt guide is no longer in the way when a person having shoulders below the predefined height sits down in the seat. Moreover, it becomes possible for the person to grasp the seat belt above her shoulder.

Since the retaining means still allows falling or sliding down, when the seat belt guide is removed, hence released and/or taken away, from the retaining means, it allows the seat belt system to maintain its self-adjusting property that is useful during transportation of small passengers, such as children. When an adult is in the seat, the seat belt guide may be left attached to the retaining means while the seat belt is being used.

Thus, due to the features of the invention, it is no longer a nuisance as described above, but instead much more convenient in its use or operation.

An elevation may for example be a cam or a ridge or any other kind of projection, and a lowering may for example be a notch, indentation, groove, recess, slit or even an opening. In fact, almost any form closed connection between the seat belt guide and seat belt will be acceptable.

In a further embodiment, the retaining means comprise a rim stitched on the seat back. With such a rim, it becomes possible to not or only slightly disturb the aesthetics of the seat back, and to obtain a low cost solution.

In another embodiment, the retaining means comprises a click-in connection engaging the seat back and the seat belt guide for making and releasing the click-in connection. In this manner, it becomes possible to realize a reliable yet very easily operable connection. The click-in connection may have a latch for locking and unlocking the click-in connection, which latch may be operable by a manually operated button on the seat back or the seat belt guide.

In yet another embodiment, the retaining means comprises a releasable magnetic connection between the seat back and the seat belt guide. This is a force-closed connection, and as such allows for an aesthetically appealing integration in the seat back and/or the seat belt guide.

An embodiment of the use of the system according to the invention is defined in claim 7. In this manner, all persons, small, medium and large, will benefit from the advantages described above.

The invention will now be illustrated on the basis of a preferred embodiment, referring to the accompanying drawings and merely as an illustration of the invention and not in limitation thereof. In the drawings, similar parts are given identical reference numerals. Here,
Figure 1 shows a front view of an embodiment of an adjustable seat belt system according to the invention,
Figure 2 shows a side view of the embodiment of Figure 1,
Figure 3a and 3b show a detail of the embodiment of Figures 1 and 2, in side cross-sectional view (Figure 3a) and front view (Figure 3b),
Figure 4 shows a detail of a second embodiment of the invention, in side cross-sectional view, and
Figure 5 shows a detail of a third embodiment of the invention, in side cross-sectional view.

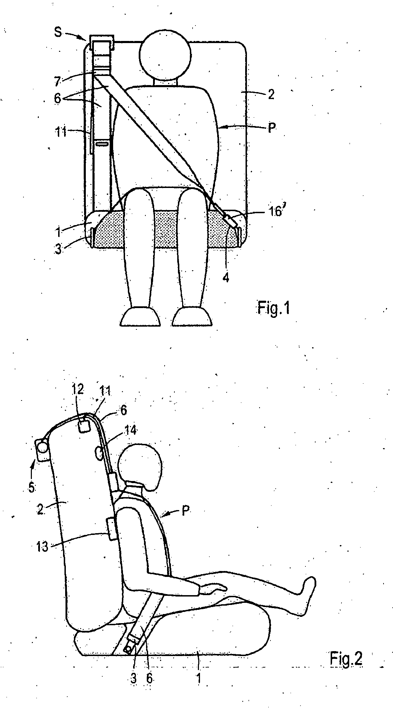

In Figure 1, an adjustable seat belt system S according to the invention is shown, for a vehicle seat comprising a seat base 1 and a seat back 2. The system S is mounted in a passenger car (not shown) in a similar manner as seat belt systems according to the state of the art are mounted, which is known per se. The system S has a first anchor point 3 and a second anchor point 4 located at both sides of the seat base, hence at a relatively low position with respect to a person P sitting in the seat. Here, the anchor points are fasted to the seat, but in a different embodiment of the invention, they may instead be fastened to the car body. A third anchor point 5 (shown in Figure 2) is located vertically above the first anchor point 3, in this embodiment at the rear of the seat back.

A seat belt webbing 6 extends from the first 3 to the second 4 anchor point and from the second 4 to the third 5 anchor point and is releasable from the second anchor point 4.

A seat belt guide 7 is fastened to the seat back 2, hence to the seat, to be movable between the first and third anchor points 3 respectively 4.

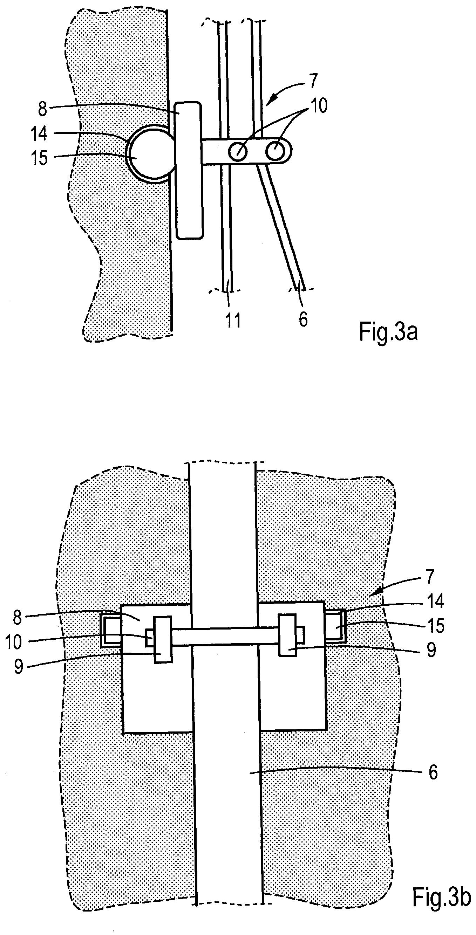

The seat belt guide 7 (see Figure 3) comprises a base plate 8 that rests against the seat back 2 and two struts 9 mounted on the base plate 8. The struts 9 carry two parallel rods 10, each extending between the two struts 9.

A first guiding means is thus formed between the base plate 8 and the rod 10 that is nearest to the base plate 8, which first guiding means serves to allow a strap 11 to pass. The strap 11 extends from an anchor point 12 at the top of the seat back 2 vertically downward over the forward face of the seat back 2 to another anchor point 13 on the front of the seat back 2 at a level of approximately 1/3^{rd} of the height of the seat back 2, which height is below the typical shoulder height of a little child. The strap 11 thus passes over part of the trajectory between the first and third anchor points 3 respectively 5.

The strap 11 is kept tight, in order to be of holding the seat belt guide 7 against or near the forward face of the seat back 2, even in case of a collision of the vehicle in which the seat is located and with a passenger P located in the seat and thus protected by the seat belt system S.

A second guiding means is formed between the two rods 10, through which second guiding means the seat belt webbing 6 passes on its way from the second anchor point 4 to the third anchor point 5.

Further, the seat back 2 has a horizontally elongated recess 14, at a height near the top of the seat back, higher than the height of the shoulder of the tallest passenger expected to take seat in the vehicle.

On the base plate 8 of the seat belt guide 7 a rod 15 is welded that fits in the recess 14, and in that position prevents that the seat belt guide 7 slides down. The guide 7 thus remains above the shoulder level of all passengers, when the rod 15 is accommodated in the recess 14.

When the seat belt system S is not in use by a passenger, the rod 15 should be in the recess 14. A passenger may easily put it there, when she leaves her seat.

The system S is meant to be used as follows. When a new passenger arrives, she will sit down and grab the seat belt anchor fixture 16', that is normally hanging somewhere over the strap 11 along the seat belt webbing 6, and bring it to and insert it into the anchor point 4. Only when a small passenger is to be transported, in particular a child, she will remove the rod 15 from the recess 14, by softly pulling it out manually. This pulling out may be done with two fingers, e.g. by holding the seat belt guide by its struts 9 and the ends of the rods 10, which provides a secure grip and a grip surface that is made of smooth metal and as such does not easily become dirty.

Alternatively, the rod 15 may be removed from the recess 14 by pulling the seat belt webbing a little away from the front face of the seat back.

When the rod 15 is removed, it will slide down automatically to a height on the strap 11 that is somewhat above the actual shoulder height of the passenger in the seat. Thus, the height of the rod 15, and thus of the seat belt guide 7, is adapted to passengers of various sizes. Since the seat belt guide 7 is kept near the seat back 2 front surface, the passenger body is also kept near the seat back front surface on impacts or collisions of the vehicle and the accompanying sudden decelerations, and thus the passenger is protected.

The recess 14 is shaped such that the rod 15 has to be lifted slightly when it is being removed from it; this serves to prevent the rod 15 from accidentally being removed.

In a variant to this embodiment of the invention, the recess 14 is replaced by a magnet, and the rod 15 is left away, the base plate 8 being magnetic or made of a metal that is attracted by magnetic fields. The form-closed connection between rod 15 and recess 14 in the first embodiment thus is replaced by a force-closed connection. In yet another variant, the recess 14 is a tray with a push-button for releasing the rod 15. A spring in the tray then pushes the rod 15 out of the tray.

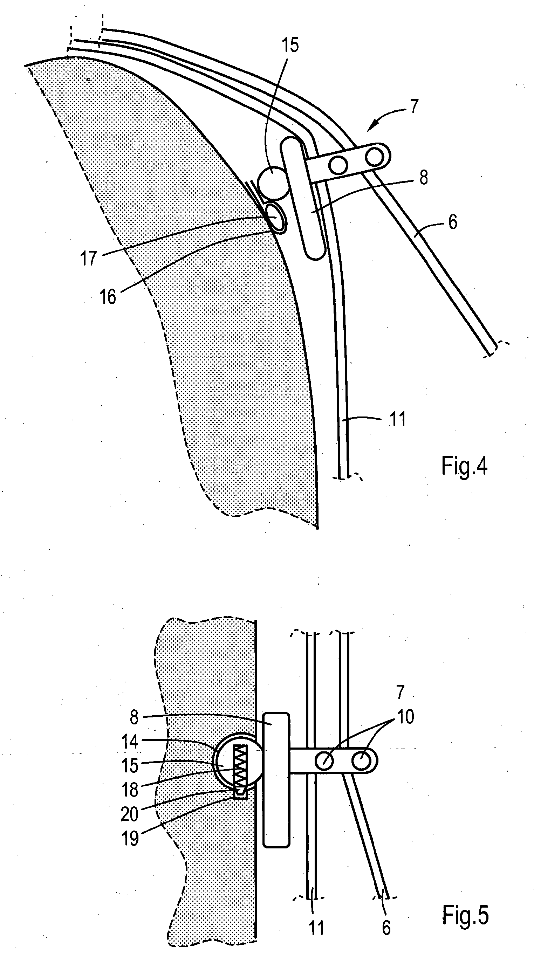

In Figure 4, a detail is shown of a variant to the first embodiment of the invention according to Figures 1-3. Here, the rod 15 of the seat belt guide 7 is supported by a rim 16, the latter being surrounded by a layer of fabric 17 stitched to the seat back 2. Thus, the recess 14 in the seat back 2 (see Figure 3) is replaced by the rim 16 on the seat back 2, and the other components of the embodiment of Figure 4 are identical to that of Figures 1-3.

In Figure 5, a detail is shown of a second variant to the first embodiment of the invention according to Figures 1-3. Here the rod 15 of the seat belt guide 7 is provided with a spring 18 and a pen 19, and the recess 14 in the seat back 2 has an indentation 20. When the rod 15 is in the recess 14, the pen 19 is pushed into the indentation 20 by the spring 18, the pen 19 thus forming a latch that will release the seat belt guide 7 from the seat back 2 when the guide 7 is pulled in a direction away from the seat back 2. Apart from the addition of spring 18, pen 19 and indentation 20, the components of the embodiment of Figure 4 are identical to that of Figures 1-3.

Other variants may be made to the embodiments shown, without leaving the scope of the claims. For example, the seat belt guide may be provided with a grip covering the rods 9 and protecting the web 6 from becoming dirty by manual contact as well as providing a convenient grip for the hand.

## Claims

1. Adjustable seat belt system (S) for a vehicle having a vehicle seat (1, 2) provided with a seat base (1) and a seat back (2), the system (S) comprising:
- a first (3) and a second lower anchor point (4) located at either side of the seat base (1),
- a third anchor point (5) located vertically above the first anchor point (3),
- a seat belt webbing (6) that extends from the first (3) to the second anchor point (4) and from the second (4) to the third anchor point (5) and that is releasable from the first (3) and/or second anchor point (4),
- a seat belt guide (7) with a base plate (8) resting against the seat back (2) fastened by first guide means formed by a strap (11) running between the base plate (8) and a rod (10) nearest to the base plate (8), which strap (11) extends from an anchor point (12) at the top of the seat back (2) vertically downward over the forward face of the seat back (2) to another anchor point (13) on the front of the seat back (2), to allow the seat belt guide (7) to move between the first anchor point (3) and the third anchor point (5), and with a second guiding means (10) that guides the seat belt webbing (6) that runs from the second (4) to the third anchor point (5), and
- retaining means (8, 9, 10; 14; 15; 16, 17, 18, 19, 20) engaging the seat belt guide (7) for preventing the latter from falling down below a predefined height, which height is higher than the first anchor point (3) and said retaining means allows such falling down when and as long as the seat belt guide (7) is removed from said retaining means,
**characterized in that** the retaining means (8, 9, 10; 14; 15; 16, 17, 18, 19, 20) comprise a relief for supporting the seat belt guide (7), formed by at least one of (a) an elevation on and (b) a lowering in the seat back (2).

2. Adjustable seat belt system (S) according to claim 1, **characterized in that** the retaining means (8, 9, 10; 14; 15; 16, 17, 18, 19, 20) comprise a rim (16) stitched on the seat back (2).

3. Adjustable seat belt system (S) according to claim 1 or 2, **characterized in that** the retaining means (8, 9, 10; 14; 15; 16, 17, 18, 19, 20) comprises a click-in connection engaging the seat back (2) and the seat belt guide (7) for engaging and releasing the click-in connection.

4. Adjustable seat belt system (S) according to claim 3, **characterized in that** the click-in connection has a latch for locking and unlocking the click-in connection.

5. Adjustable seat belt system (S) according to claim 4, **characterized in that** the latch is operable by a manually operated button on the seat back (2) or the seat belt guide (7).

6. Adjustable seat belt system (S) according to one of the preceding claims, **characterized in that** the retaining means (8, 9, 10; 14; 15; 16, 17, 18, 19, 20) comprises a releasable magnetic connection between the seat back)2) and the seat belt guide (7).

7. Use of the adjustable seat belt system (S) according to any one of the claims 1-6, **characterized in that** the predefined height is at or slightly above the shoulders of an adult person (P).

## Patentansprüche

1. Einstellbares Sicherheitsgurtsystem (S) für ein Fahrzeug, welches einen mit einer Sitzfläche (1) und einer Sitzrückenlehne (2) ausgestatteten Fahrzeugsitz (1, 2) aufweist, wobei das System (S) umfasst:
- einen ersten (3) und einen zweiten unteren Ankerpunkt (4), welche sich an je einer Seite der Sitzfläche (1) befinden,
- einen dritten Ankerpunkt (5), welcher sich vertikal oberhalb des ersten Ankerpunktes (3) befindet,
- ein Sicherheitsgurtband (6), welches sich von dem ersten (3) zu dem zweiten Ankerpunkt (4) und von dem zweiten (4) zu dem dritten Ankerpunkt (5) erstreckt und welches von dem ersten (3) und/oder dem zweiten Ankerpunkt (4) lösbar ist,
- eine Sicherheitsgurtführung (7) mit einer an der Sitzrückenlehne (2) anliegenden Grundplatte (8), welche durch erste Führungsmittel befestigt ist, die von einem zwischen der Grundplatte (8) und einer der Grundplatte (8) nächstgelegenen Stange (10) verlaufenden Riemen (11) gebildet sind, wobei sich der Riemen (11) von einem Ankerpunkt (12) am Kopfende der Sitzrückenlehne (2) über die vordere Stirnseite der Sitzrückenlehne (2) vertikal abwärts zu einem weiteren Ankerpunkt (13) an der Vorderseite der Sitzrückenlehne (2) erstreckt, um der Sicherheitsgurtführung (7) zu ermöglichen, sich zwischen dem ersten Ankerpunkt (3) und dem dritten Ankerpunkt (5) zu bewegen, und mit einem zweiten Führungsmittel (10), welches das von dem zweiten (4) zu dem dritten Ankerpunkt (5) verlaufende Sicherheitsgurtband (6) führt, und
- Haltemittel (8, 9, 10; 14; 15; 16, 17, 18, 19, 20), welche in Eingriff mit der Sicherheitsgurtführung (7) stehen, um diese daran zu hindern, unter eine vordefinierte Höhe herabzufallen, wobei diese Höhe höher liegt als der erste Ankerpunkt (3) und das Haltemittel ein solches Herabfallen ermöglicht, wenn und solange die Sicherheitsgurtführung (7) von dem Haltemittel abgenommen ist,
**dadurch gekennzeichnet, dass** die Haltemittel (8, 9, 10; 14; 15; 16, 17, 18, 19, 20) ein Relief zum Tragen der Sicherheitsgurtführung (7) umfassen, welches gebildet ist durch mindestens eines von (a) einer Erhöhung auf und (b) einer Senkung in der Sitzrückenlehne (2).

2. Einstellbares Sicherheitsgurtsystem (S) nach Anspruch 1, **dadurch gekennzeichnet, dass** die Haltemittel (8, 9, 10; 14; 15; 16, 17, 18, 19, 20) einen auf die Sitzrückenlehne (2) aufgenähten Halterand (16) umfassen.

3. Einstellbares Sicherheitsgurtsystem (S) nach Anspruch 1 oder 2, **dadurch gekennzeichnet, dass** das Haltemittel (8, 9, 10; 14; 15; 16, 17, 18, 19, 20) eine die Sitzrückenlehne (2) und die Sicherheitsgurtführung (7) in Eingriff bringende Rastverbindung zum Eingehen und Lösen der Rastverbindung umfasst.

4. Einstellbares Sicherheitsgurtsystem (S) nach Anspruch 3, **dadurch gekennzeichnet, dass** die Rastverbindung eine Falle zum Sperren und Entsperren der Rastverbindung aufweist.

5. Einstellbares Sicherheitsgurtsystem (S) nach Anspruch 4, **dadurch gekennzeichnet, dass** die Falle über einen manuell betätigbaren Druckknopf auf der Sitzrückenlehne (2) oder der Sicherheitsgurtführung (7) bedienbar ist.

6. Einstellbares Sicherheitsgurtsystem (S) nach einem der vorhergehenden Ansprüche, **dadurch gekennzeichnet, dass** das Haltemittel (8, 9, 10; 14; 15; 16, 17, 18, 19, 20) eine lösbare Magnetverbindung zwischen der Sitzrückenlehne (2) und der Sicherheitsgurtführung (7) umfasst.

7. Verwendung des einstellbaren Sicherheitsgurtsystems (S) nach einem der Ansprüche 1 bis 6, **dadurch gekennzeichnet, dass** die vordefinierte Höhe an den oder ein wenig oberhalb der Schultern eines erwachsenen Menschen (P) liegt.

## Revendications

1. Système de ceinture de sécurité réglable (S) pour un véhicule comportant un siège de véhicule (1, 2) pourvu d'une base de siège (1) et d'un dossier de siège (2), le système (S) comprenant:
- un premier point d'ancrage inférieur (3) et un deuxième point d'ancrage inférieur (4) situés de chaque côté de la base de siège (1),
- un troisième point d'ancrage (5) situé verticalement au-dessus du premier point d'ancrage (3),
- une sangle de ceinture de sécurité (6) qui s'étend du premier point d'ancrage (3) au deuxième point d'ancrage (4) et du deuxième point d'ancrage (4) au troisième point d'ancrage (5), et qui peut être libérée du premier point d'ancrage (3) et/ou du deuxième point d'ancrage (4),
- un guide de ceinture de sécurité (7) avec une plaque de base (8) reposant contre le dossier du siège (2), attaché par un premier moyen de guidage formé par une courroie (11) passant entre la plaque de base (8) et une tige (10) la plus proche de la plaque de base (8), ladite courroie (11) s'étendant d'un point d'ancrage (12) au-dessus du dossier de siège (2) verticalement vers le bas par-dessus la face avant du dossier de siège (2) jusqu'à un autre point d'ancrage (13) à l'avant du dossier de siège (2), pour permettre au guide de ceinture de sécurité (7) de se déplacer entre le premier point d'ancrage (3) et le troisième point d'ancrage (5), et avec un deuxième moyen de guidage (10) qui guide la sangle de ceinture de sécurité (6) qui passe du deuxième point d'ancrage (4) au troisième point d'ancrage (5), et
- moyen de rétention (8, 9, 10; 14; 15; 16, 17, 18, 19, 20) qui s'engage avec le guide de ceinture de sécurité (7) pour éviter que ce dernier ne descende sous une hauteur prédéfinie, ladite hauteur étant supérieure au premier point d'ancrage (3), et ledit moyen de rétention permettant une telle baisse quand, et aussi longtemps que, le guide de ceinture de sécurité (7) est enlevé dudit moyen de rétention,
**caractérisé en ce que** le moyen de rétention (8, 9, 10; 14; 15; 16, 17, 18, 19, 20) comprend un support pour supporter le guide de ceinture de sécurité (7), formé par au moins un élément parmi (a) un rehaussement sur le dossier de siège (2) et (b) un renfoncement dans celui-ci.

2. Système de ceinture de sécurité réglable (S) selon la revendication 1, **caractérisé en ce que** le moyen de rétention (8, 9, 10; 14; 15; 16, 17, 18, 19, 20) comprend un bourrelet (16) cousu sur le dossier de siège (2).

3. Système de ceinture de sécurité réglable (S) selon la revendication 1 ou 2, **caractérisé en ce que** le moyen de rétention (8, 9, 10; 14; 15; 16, 17, 18, 19, 20) comprend une connexion à cliquet qui engage le dossier de siège (2) et le guide de ceinture de sécurité (7) pour engager et libérer la connexion à cliquet.

4. Système de ceinture de sécurité réglable (S) selon la revendication 3, **caractérisé en ce que** la connexion à cliquet comporte un verrou pour verrouiller et déverrouiller la connexion à cliquet.

5. Système de ceinture de sécurité réglable (S) selon la revendication 4, **caractérisé en ce que** le verrou est actionnable par un bouton actionné manuellement sur le dossier de siège (2) ou sur le guide de ceinture de sécurité (7).

6. Système de ceinture de sécurité réglable (S) selon l'une des revendications précédentes, **caractérisé en ce que** le moyen de rétention (8, 9, 10; 14; 15; 16, 17, 18, 19, 20) comprend une connexion magnétique détachable entre le dossier de siège (2) et le guide de ceinture de sécurité (7).

7. Utilisation du système de ceinture de sécurité réglable (S) selon l'une quelconque des revendications 1 à 6, **caractérisée en ce que** la hauteur prédéfinie est égale ou légèrement supérieure à la hauteur des épaules d'une personne adulte (P).
